# EUROPEAN PATENT APPLICATION

(11) **EP 4 477 565 A1**
(43) Date of publication of application: **18.12.2024**
(21) Application number: 23749375.4
(22) Date of filing: 27.01.2023
(51) Int. Cl.: B65B 5/06, B65B 35/50, B65G 57/16

(54) **LOADER AND CUP-PACKAGING MACHINE**

(30) Priority: 07.02.2022 ES 202230090
(71) Applicant: Coalza Systems, S.L., 46470 Massanassa (Valencia) (ES)
(72) Inventor: TEJEDOR MUNGUÍA, Sergio, 46470 Massanassa Valencia (ES)
(74) Representative: Ungria López, Javier
(86) International application number: PCT/ES2023/070042
(87) International publication number: WO 2023/148414

(57) **Abstract**

The machine comprises a loader (2); a packer (4) for packing packs (11) of cups (1), located below the loader (2) and configured to wrap the packs (11) with a film; a first conveyor belt (5) configured to carry the wrapped packs (11); a diverter module (6) which receives the wrapped packs (11) carried by the first conveyor belt (5); and a film feeder (3) configured to feed the packer (4) that wraps the packs (11) of cups (1) with the film. The machine can package cups arriving from at least two cup production lines with the resulting advantages afforded, such as increased production, reduced factory space required for installation, and lower costs both in terms of necessary infrastructure and the final product obtained.

## Description

### Object of the invention

The present invention relates to a loader and cup-packaging machine which can package cups arriving from at least two cup production lines with the resulting advantages afforded, such as increased production, reduced factory space required for installation, and lower costs both in terms of necessary infrastructure and the final product obtained.

### Technical field

The present invention is comprised in the technical field relating to machines and systems for the packaging of different products, and specifically for the packaging of elements that fit into one another by means of stacking them one inside another such as, for example, cups having a frustoconical configuration.

### Technical problem to be solved and background of the invention

At present, horizontal-type disposable cup-packaging machines are slow, take up a lot of floor space, and their integration into modern disposable cup production facilities is not the most ideal.

This has led the producers of such packaging machines to opt for vertical machines such as the machine of the invention to be protected, with these vertical machines being simpler and more reliable, while requiring a smaller work surface in the factory.

Up until now, one packaging machine has been used for each cup thermoforming line, such that its work capacity is logically limited to an acceptable production, but not to a production that is higher than the production which can be supplied by thermoforming line itself.

### Description of the invention

In order to achieve the objectives and avoid the drawbacks in the preceding sections, the invention proposes a loader and cup-packaging machine, wherein the loader comprises a framework formed by vertical profiles, a first intermediate platform, a second intermediate platform, an upper end platform, and a lower end platform; wherein said framework configures a first upper level, a second intermediate level located below the first level, and a third lower level located below the second level.

The first level includes at least two first vertical structures, the second level includes at least two second vertical structures, and the third level includes at least two reject conduits and a third conduit.

The first structures of the first level open, at one of the ends thereof, into first through holes going through the first intermediate platform which separates the first level and the second level.

The second intermediate platform separates the second level and the third level; wherein said second intermediate platform includes second through holes and a central through hole connecting with the third conduit.

The second vertical structures of the second level are attached to moving carriages configured to selectively move the second vertical structures to a first position in which the second vertical structures are independently aligned with the third conduit of the third level; and to a second position in which the second vertical structures communicate the first vertical structures with the reject conduits.

The four vertical structures of the first level and the second level delimit vertical tubular spaces configured to receive the cups which are stacked in packs in order to guide them to the conduits selected from the third conduit and the two reject conduits.

The loader includes retention means for retaining the packs of cups during the time when they are inside the vertical structures.

The loader includes first linear actuators to which there are connected fingers on which the packs of cups are supported as retention means for retaining said packs of cups when they are inside the vertical structures of the first level and the second level; wherein the activation of the first linear actuators moves the fingers to positions in which the fall of the packs of cups is released.

The carriages located in the second level are coupled to straight guides integral with the second intermediate platform which separates the second level and the third level; wherein said carriages are connected to second linear actuators configured to move the carriages along the length of the straight guides; and wherein the first linear actuators of the second level are mounted on the carriages.

The first linear actuators associated with the fingers of the first level are mounted on the first intermediate platform which separates the first level and the second level.

The fingers include pneumatic connections configured to blow rising air into the vertical structures in order to cushion the fall of the first cups inside said vertical structures.

The first and second vertical structures comprise a configuration selected from parallel vertical bars and tubular bodies.

The loader further comprises vibrating devices configured to act on the first and second vertical structures housing the stacked cups.

The cup-packaging machine comprises the described loader, a packer for packing packs of cups located below the loader and configured to wrap the packs with a film; a first conveyor belt configured to carry the wrapped packs; a diverter module which receives the wrapped packs carried by the first conveyor belt; and a film feeder configured to feed the packer that wraps the packs of cups.

The pack of cups runs along the inside of the packer, from its inlet to its outlet, with a slope that is the continuation of the inclination of a final segment of the third conduit which opens into the inlet of said packer; wherein the outlet of the packer opens into the first conveyor belt.

The first conveyor belt comprises a first horizontal segment with the outlet of the packer opening into same, and a second inclined segment, the higher end of which opens into the diverter module.

The diverter module comprises a second conveyor belt which receives the wrapped packs, and a selector device configured to move the wrapped packs supported on the second conveyor belt to one side of said second conveyor belt or another.

The selector device includes a rotating element to which a blade is attached for moving the wrapped packs to one side or another while being carried by the second conveyor belt.

There are located on both opposite sides of the second conveyor belt two ramps that open into collection bins configured to receive the wrapped packs of cups moved by the selector device.

To help better understand this specification, and as an integral part thereof, a series of figures is attached, in which the object of the invention is depicted in an illustrative and non-limiting manner.

### Brief description of the figures

**Figure 1** shows a front view of the cup-packaging machine, object of the invention.

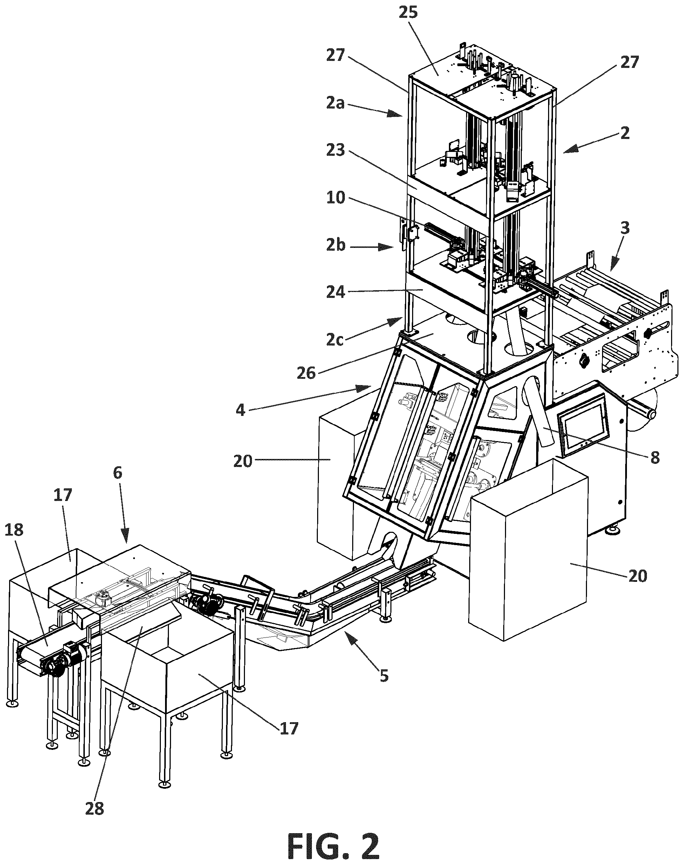

**Figure 2** shows a perspective view of the packaging machine of the invention.
**Figure 3** shows a front view of a cup loader which is part of the machine of the invention.
**Figure 4** shows a perspective view of the cup loader.
**Figure 5** shows another perspective view of a part of the cup loader.

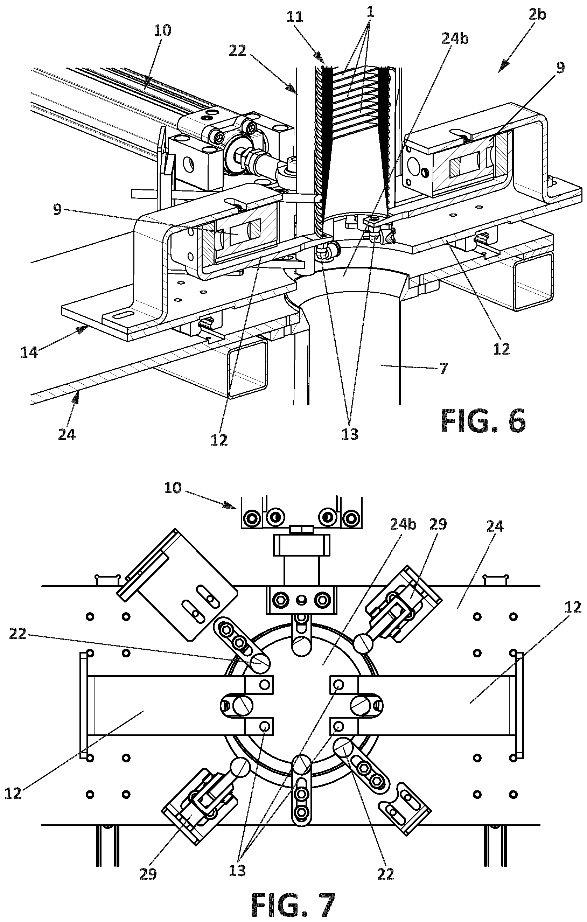

**Figure 6** shows a sectioned perspective view of a part of the cup loader.
**Figure 7** shows a plan view of the depiction of Figure 6.

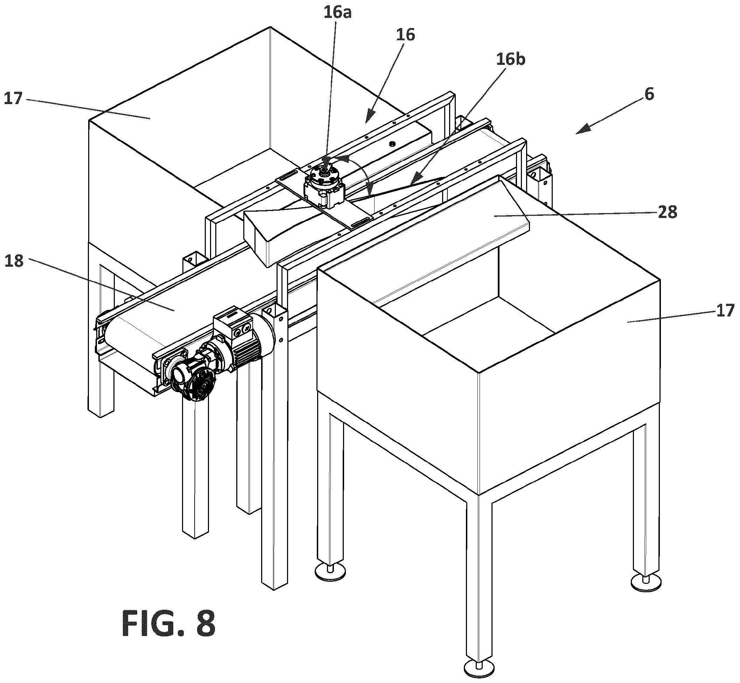

**Figure 8** shows a perspective view of a cup diverter which is part of the machine of the invention.

### Description of an exemplary embodiment of the invention

Considering the numbering used in the figures, the cup-packaging machine 1 comprises a vertical loader 2 for loading cups 1, a packer 4, a plastic film feeder 3, a diverter module 6, and a first conveyor belt 5 carrying each pack 11 of stacked cups 1 from the outlet of the packer 4 to the diverter module 6 which is in charge of diverting each pack 11 of wrapped cups 1 towards either side collection bin 17 located on both opposite sides of the packer 4. The first conveyor belt 5 comprises a first horizontal segment 5a and a second inclined segment 5b that opens into the diverter module 6.

The vertical loader 2 for loading cups 1 comprises a framework formed by vertical profiles 27 and four horizontal platforms, two intermediate platforms: first intermediate platform 23 and second intermediate platform 24 and two end platforms: upper end platform 25 and lower end platform 26. These four platforms are attached to the vertical profiles 27 which are attached to said horizontal platforms.

Said framework is formed by the vertical profiles and the four platforms configuring a first upper level 2a, a second intermediate level 2b located below the first level 2a, and a third lower level 2c located below the second level 2b.

Two fixed first vertical structures 21 are located in the first level 2a and two moving second vertical structures 22 are located in the second level; such that in principle the first vertical structures 21 and the second vertical structures 22 are aligned and communicated with one another by means of first through holes 23a going through the first intermediate platform 23 which separates the first level 2a and the second level 2b. These vertical structures 21, 22 delimit tubular spaces configured to guide and accommodate packs 11 of stacked cups 1 with the mouths thereof located in the lower portion.

In a first embodiment of the invention, the first vertical structure 21 and the second vertical structure 22 2 comprise vertical bars, whereas in a second embodiment of the invention they comprise tubular bodies.

In contrast, the second intermediate platform 24 separates the second level 2b and the third level 2c; wherein said second intermediate platform includes second through holes 24a with, in principle, the second vertical structures of the second level 2b opening into same, while there are located in the third level 2c two reject conduits 8 connected, at one of the ends thereof, to the second through holes 24a below the second intermediate platform, while said reject conduits 8 go through the lower end platform opening into reject bins 20.

A third conduit 7 serving as a guide for each pack 11 of stacked cups 1 in order to guide them to the inlet of the packer 4 is located in the third level 2c of the vertical loader 2. To that end, the second intermediate platform 24 includes a central through hole 24b connecting with the third conduit 7 which also goes through the lower end platform 26, below which the packer 4 is arranged, wherein each pack 11 of cups 1 is automatically and conventionally introduced into a plastic bag formed from the plastic film provided by the film feeder 3.

Inside the first vertical structure 21 and the second vertical structure 22 up to four packs 11 of cups 1 (one for each vertical structure) can be stacked independently and separately, in an inverted position, which cups being supported, in principle, on opposing pairs of fingers 12 positioned above the first intermediate platform 23 and the second intermediate platform 24 in the proximity thereof.

For the packs 11 of cups 1 which are inside the first vertical structure 21 and the second vertical structure 22 to fall downwards, the pairs of fingers 12 must retract in order to release the fall of said packs 11 of cups 1 by gravity, such that the mobility of said fingers 12 is carried out by means of first linear actuators 9, 9' such as, for example, pneumatic cylinders.

The second vertical structures 22 are attached to respective carriages 14 coupled to straight guides 15 integral with the second intermediate platform 24, such that the two assemblies of carriages 14 along with their respective second vertical structures 22 can be mobilised along the length of the straight guides 15 to reach a first position in which the second vertical structures 22 are independently aligned with the third conduit 7 for feeding the packer 4; or to reach a second position in which said second vertical structures 22 communicate the first vertical structures 21 with the respective reject conduits 8 to enable disposing the packs 11 of stacked cups 1 when the machine detects an anomaly in said cups 1.

It should be noted that the second vertical structures 22 are usually located in the second position in which they can receive the packs 11 of cups 1 by gravity from the first vertical structures 21 having released the fall thereof by retracting the fingers 12.

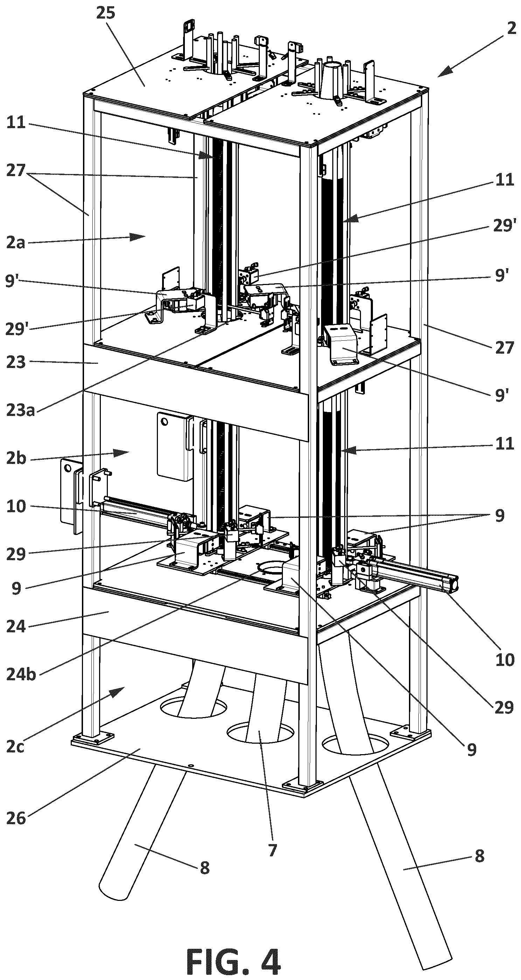

As more clearly shown in Figure 4, second linear actuators 10 (pneumatic cylinders) are in charge of moving the carriages 14 separately so that the second vertical structures 22 are arranged facing the reject conduits 8, or the third conduit 7, and thereby discharging by gravity the respective pack 11 of cups (previously housed in each second vertical structure 21) into the third conduit 7 to feed the packer 4 in which each pack 11 of cups 1 is introduced into a bag formed by the film provided by the film feeder 3.

When there is an anomaly or defect in the packs 11 of stacked cups 1 in the second vertical structures 22, these structures are kept in their second position and the fingers 12 are retracted by means of the first linear actuators 9, whereby the packs 11 of cups 1 fall directly through the respective reject conduit 8 to the reject bins 20. Likewise, the fingers 12 are retracted when the respective second structures vertical 22 is aligned with the third conduit 7 to guide the cups to the packer 4. Said first linear actuators 9 are fixed to the moving carriages 14 which are moved by means of the second linear actuators 10.

In contrast, the first linear actuators 9' associated with the fingers 12 of the first level 2a to retain the packs 11 of cups 1 are directly fixed to the first intermediate platform 23 itself which separates the first level 2a and the second level 2b.

Two first linear actuators 9 are fixed in each of the carriages 14 to enable mobilising the pair of opposing fingers 12 of the first level 2a. Both in the first level 2a and in the second level 2b, the fingers 12 include pneumatic connections 13 through which air is blown in to cushion the sudden fall of the cups 1 and protect the respective first lower cup of each pack 11 of stacked cups 1. In this way, the edge delimiting the mouth of said first cup 1 in an inverted position is not damaged.

Each pack 11 of cups 1 received by the packer 4 from the loader 2 is introduced into a bag inside the packer 4 itself, as mentioned above, and this complete set formed by the bag and cups 1 runs, expelled outwards, by gravity through a lower outlet as a result of the slope having a descending guide of the packer 4, such that there is arranged in said lower outlet an end segment of the first conveyor belt 5 carrying said complete set to a second conveyor belt 18 of the diverter module 6, wherein the complete set of the bag and cups 1 is moved towards one of the two collection bins 17 arranged on both sides of the diverter module 6.

To that end, the diverter module 6 includes a selector device 16 which moves the complete set of the bag and cups 1, running supported on the second conveyor belt 18, to one collection bin 17 or another. To that end, the selector device 16 comprises a rotating element 16a to which a blade 16b is attached for moving the packs 11 of wrapped cups 1 to one side or another so that they can fall into the collection bins 17; wherein said blade 16b has a configuration in the shape of an elongated wedge.

Therefore, the main novelty of the invention lies in the loader 2 of the cups 1, which has an intelligent function of selectively rationing to the packer 4, through the third inlet conduit 7 thereof, the different packs 11 or columns of stacked cups 1 in the second vertical structures 22.

At first, the cups 1 reach the first vertical structures 21 driven by air and accumulate after passing through a counter in the second level 2b or in the first level 2a (if the second vertical structures 22 of the second level 2b are occupied or in motion).

The cups 1 pass through a specific detector (not depicted in the figures as it is a conventional element), which performs the function of counting the cups 1 and controls, by means of a program, the associated mechanical movements, such that the packs 11 of stacked cups 1 are stopped in the first level 2a and the second level 2b, by means of the fingers 12 activated by the first pneumatic linear actuators 9, 9'.

These fingers 12 have pneumatic connections 13 (the feeding hoses have not been depicted) through which air is blown in to stop the sudden fall of the pack 11 of cups 1 and protect the first lower cup 1 of said pack 11 of stacked cups, as mentioned above; thereby preventing damage to the cups 1.

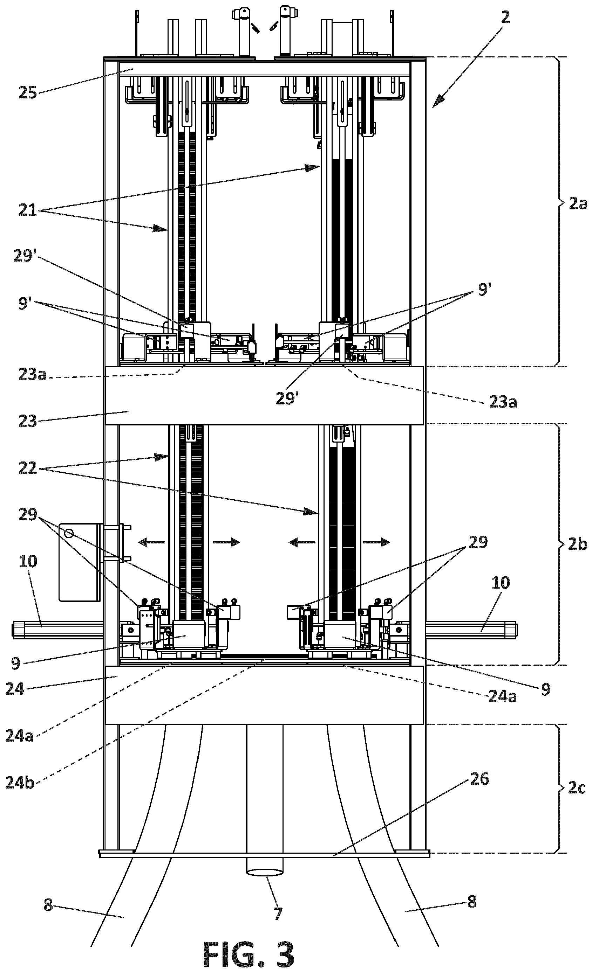

As shown more clearly in Figure 3, the initial standby position of the machine of the invention is the rejection position (the second vertical structures 22 are aligned with the reject conduits 8) in order to readily release possible blockages.

In turn, by means of detections and the program of the machine, it can be determined when the number of cups 1 needed to form a pack 11 of stacked cups is reached, such that once reaching the number of cups 1 needed, said pack 11 of cups 1 is brought to the third conduit 7 that opens into the packer 4.

The design of the machine of the invention, and more specifically of the loader 2, also allows loading cups 1 of different formats in each row (always the same format in the row itself logically) since fitting between cups 1, for example, with diameters between 63 mm and 87 mm, is mechanically allowed. As a result of the first linear actuators 9, 9' and the second linear actuator 10, movement times may overlap, thereby achieving improved performance and production.

Once the respective pack 11 of cups 1 is in the packed position, said pack 11 would enter the area of the packer 4.

On the other hand, it should be noted that while the first vertical structures 21 of the first level 2a are filled with cups 1, simultaneously the second linear actuators 10 move the second vertical structures 22 of the second level 2b through the carriages 14, from their rejection positions to the central area for emptying into the packer 4 through the third conduit 7 located in the third level 2c. In said rejection positions the second vertical structures 22 receive the packs 11 of cups 1 that are already fitted/located previously in the first vertical structures 21 of the first level 2a.

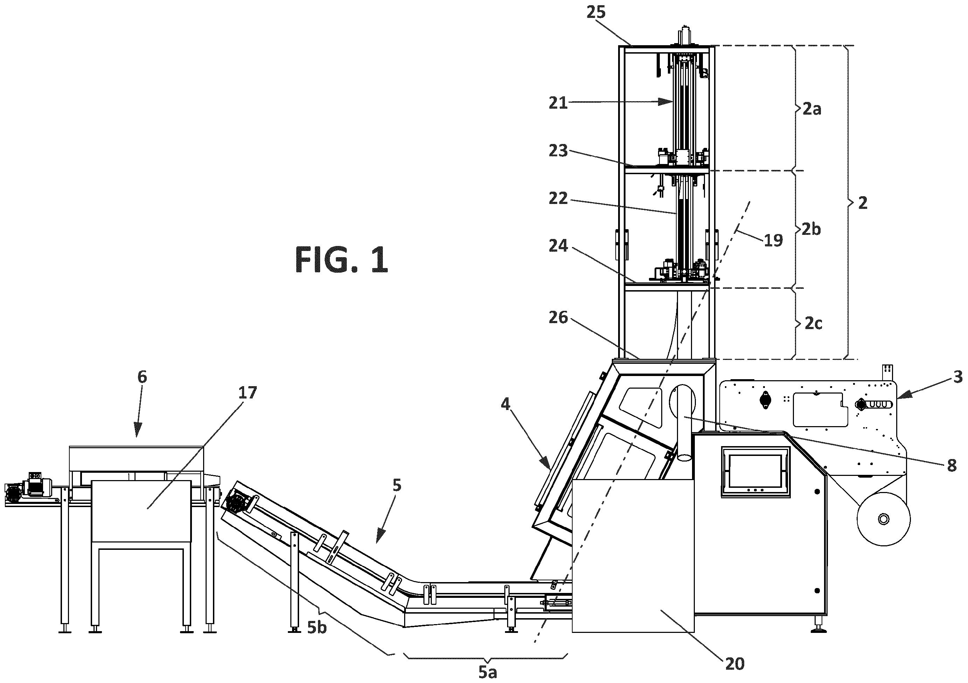

The uniqueness of the invention which lies in the lower morphology of the machine is highlighted, wherein the packer 4 is not aligned with the reject conduits 8, but rather adopts certain inclination in line with the inclination of a final segment of the third conduit 7 that opens into said packer 4 (Figure 1). This inclination causes the already formed and wrapped packs 11 of cups 1 to be gently deposited on the first horizontal segment 5a of the first conveyor belt 5. Said inclination is depicted in Figure 1 with a dash-dotted line 19.

Furthermore, it should be highlighted that the packs 11 of wrapped cups 1 run smoothly along the length of the first conveyor belt 5 as a result of its second inclined segment 5b which brings said packs 11 of wrapped cups 1 to the height of the diverter module 6 which is in charge of selecting the outlet for each of said packs 11 of cups 1.

In terms of the selector device 16, by program, since it is connected to the same PLC, it is known from where the formed pack 11 originates upstream of the machine, so sorting can be performed with said selector device 16, which finally moves the pack to one side of the second conveyor belt 18 or another where ramps 28 that open into the collection bins 17 are located.

On the other hand, the first vertical structures 21 go through the upper end platform 25, such that the cups 1 initially enter said first vertical structures 21 through the ends thereof located in correspondence with said upper end platform 25.

To ensure the correct stacking of the cups 1 as they fall into the first vertical structure 21 and the second vertical structure 22, vibrating devices 29, 29' have been envisaged which, in the case of the second level 2b, are installed on the moving carriages 14, while in the case of the first level 2a the vibrating devices 29' are installed on the first platform 3 separating the first level 2a and the second level 2b.

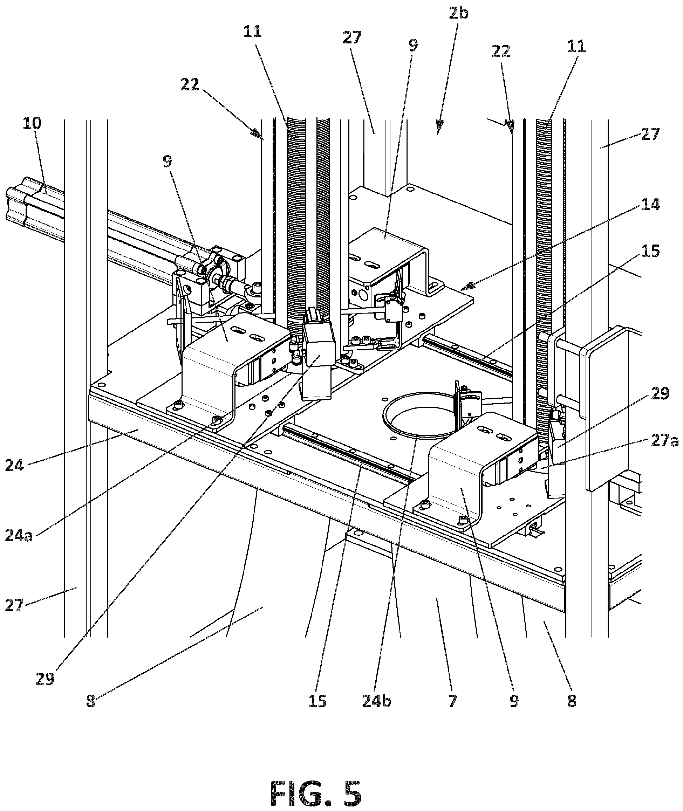

In the embodiment shown in the figures, the vibrating devices 29, 29' are configured by pneumatic cylinders, the rods of which act on the vertical structures 21, 22; and more specifically on some of the vertical bars of the first embodiment of said vertical structures 21, 22 (Figure 5).

Therefore, considering said first embodiment, to ensure correct stacking inside the vertical structures 21, 22, the mentioned pneumatic cylinders are actuated to move closer to and away from the vertical bars. Their function is to perform a pendulum movement which causes the complete vertical row of cups 1 to be formed correctly. To that end, elastic elements (silent block) which allow performing this vibrating movement are included, such that the pneumatic cylinders act on a lower part of the vertical bars, while the elastic elements are in contact with an upper part of said vertical bars.

## Claims

1. **A cup loader**, **characterised in that**:
- it comprises a framework formed by vertical profiles (27), a first intermediate platform (23), a second intermediate platform (24), an upper end platform (25), and a lower end platform (26); wherein said framework configures a first upper level (2a), a second intermediate level (2b) located below the first level (2a), and a third lower level (2c) located below the second level (2b);
- the first level (2a) includes at least two first vertical structures (21), the second level (2b) includes at least two second vertical structures (22), and the third level (2c) includes at least two reject conduits (8) and a third conduit (7);
- the first vertical structures (21) of the first level (2a) open, at one of the ends thereof, into first through holes (23a) going through the first intermediate platform (23) which separates the first level (2a) and the second level (2b);
- the second intermediate platform (24) separates the second level (2b) and the third level (2c); wherein said second intermediate platform (24) includes second through holes (24a) and a central through hole (24b) connecting with the third conduit (7);
- the second vertical structures (22) of the second level (2b) are attached to moving carriages (14) configured to selectively move the second vertical structures (22) to a first position in which the second vertical structures (22) are independently aligned with the third conduit (7) of the third level (2c); and to a second position in which the second vertical structures (22) communicate the first vertical structures (21) with the reject conduits (8);
wherein the vertical structures (21, 22) of the first level (2a) and the second level (2b) delimit vertical tubular spaces configured to receive and accommodate the cups (1) which are stacked in packs (11) in order to guide them to the conduits selected from the third conduit (7) and the reject conduits (8);
- it includes retention means for retaining the packs (11) of cups (1) when they are inside the vertical structures (21, 22) of the first level (2a) and the second level (2b).

2. **The cup loader** according to claim 1, **characterised in that** it includes first linear actuators (9, 9') to which there are connected fingers (12) on which the packs (11) of cups (1) are supported as retention means for retaining said packs (11) of cups (1) when they are inside the vertical structures (21, 22) of the first level (2a) and the second level (2b); wherein the activation of said first linear actuators (9, 9') moves the fingers (12) to positions in which the fall of the packs (11) of cups (1) is released.

3. **The cup loader** according to claim 2, **characterised in that** the carriages (14) are coupled to straight guides (15) integral with the second intermediate platform (24) which separates the second level (2b) and the third level (2c); wherein said carriages (14) are connected to second linear actuators (10) configured to move the carriages (14) along the length of the straight guides (15); and wherein the first linear actuators (9) of the second level (2b) are mounted on the carriages (14).

4. **The cup loader** according to any one of the preceding claims 2 or 3, **characterised in that** the first linear actuators (9') associated with the fingers (12) of the first level (2a) are mounted on the first intermediate platform (23) which separates the first level (2a) and the second level (2b).

5. **The cup loader** according to any one of the preceding claims 2 to 5, **characterised in that** the fingers (12) include pneumatic connections (13) configured to blow rising air into the first vertical structure (21) and the second vertical structure (22) in order to cushion the fall of the first cups (1) inside said vertical structures (21, 22).

6. **The cup loader** according to any one of the preceding claims, **characterised in that** the first vertical structure (21) and the second vertical structure (22) comprise a configuration selected from parallel vertical bars and tubular bodies.

7. **The cup loader** according to claim 6, **characterised in that** it comprises vibrating devices (29, 29') configured to act on the first vertical structure (21) and the second vertical structure (22) housing the stacked cups (1).

8. **A cup-packaging machine**, **characterised in that** it comprises the loader (2) described in any one of the preceding claims, a packer (4) for packing packs (11) of cups (1) located below the loader (2) and configured to wrap the packs (11) with a film; a first conveyor belt (5) configured to carry the wrapped packs (11) leaving the packer (4); a diverter module (6) which receives the wrapped packs (11) carried by the first conveyor belt (5); and a film feeder (3) configured to feed the packer (4) that wraps the packs (11) of cups (1).

9. **The cup-packaging machine** according to claim 8, **characterised in that** the pack (11) of cups (1) runs along the inside of the packer (4), from its inlet to its outlet, with a slope that is the continuation of the inclination of a final segment of the third conduit (7) which opens into the inlet of said packer (4); wherein the outlet of the packer (4) opens into the first conveyor belt (5).

10. **The cup-packaging machine** according to any one of the preceding claims 8 or 9, **characterised in that** the first conveyor belt (5) comprises a first horizontal segment (5a) with the outlet of the packer (4) opening into same, and a second inclined segment (5b), the higher end of which opens into the diverter module (6).

11. **The cup-packaging machine** according to any one of the preceding claims 8 to 10, **characterised in that** the diverter module (6) comprises a second conveyor belt (18) which receives the wrapped packs (11) of cups, and a selector device (16) configured to move the wrapped packs (11) supported on the second conveyor belt (18) to one side of said second conveyor belt (18) or another.

12. **The cup-packaging machine** according to claim 11, **characterised in that** the selector device (16) includes a rotating element (16a) to which a blade (16b) is attached for moving the wrapped packs (11) to one side of the second conveyor belt (18) or another.

13. **The cup-packaging machine** according to claim 12, **characterised in that** there are located on both opposite sides of the second conveyor belt (18) two ramps (28) that open into collection bins (17) configured to receive the wrapped packs (11) of cups (1) moved by the selector device (16).
